# EUROPÄISCHE PATENTSCHRIFT

(11) **EP 2 292 933 B1**
(45) Veröffentlichungstag und Bekanntmachung des Hinweises auf die Patenterteilung: **25.05.2016**
(21) Anmeldenummer: 10008932.5
(22) Anmeldetag: 27.08.2010
(51) Int. Cl.: F04D 19/04, F04D 29/60, F16D 1/033, F16D 1/076, F16D 7/00, F16B 5/02, F16D 9/00

(54) **Anordnung zum Verbinden zweier Bauteile, insbesondere Flanschverbindung**
Assembly for connecting two components, in particular flange connection
Agencement de liaison de deux composants, notamment une bride de liaison

(30) Priorität: 28.08.2009 DE 102009039119
(43) Veröffentlichungstag der Anmeldung: 09.03.2011
(73) Patentinhaber: Pfeiffer Vacuum GmbH, 35614 Aßlar (DE)
(72) Erfinder: Schmeer, Sebastian, Dr.-Ing., 67434 Neustadt (DE); Blaurock, Jörg, Dr. Ing., 55232 Alzey (DE); Schweighöfer, Michael, 35614 Asslar (DE); Watz, Robert, 35781 Weilburg (DE)
(74) Vertreter: Manitz, Finsterwald & Partner GbR

(56) Entgegenhaltungen:
- EP-A2- 1 273 815
- WO-A1-2007/042842
- JP-A- 2006 037 930
- US-A1- 2005 047 905

## Beschreibung

### Technisches Gebiet

Die Erfindung betrifft eine Anordnung zum Verbinden eines ersten Bauteils mit einem zweiten Bauteil gemäß dem Oberbegriff des Patentanspruchs 1 sowie eine Vakuumpumpe mit einer solchen Anordnung gemäß Patentanspruch 25.

Anordnungen dieser Art sind z.B. aus EP 1 273 815 A2 bekannt, und werden überall dort eingesetzt, wo zwei Bauteile mit Hilfe mindestens eines Verbindungsmittels zusammengespannt werden sollen und haben ein dementsprechend weites Anwendungsgebiet. Beispielhaft seien der Maschinenbau oder das Bauwesen genannt. Besondere Bedeutung kommt dabei der Verbindung von Bauteilen zu, deren Versagen bei Überlastung zu einem Stabilitätsversagen der gesamten Einheit ohne Vorankündigung führen würde, beispielsweise zum Zusammensturz eines Gebäudes, zum Bruch einer Pipeline, zum Verlust der Aufhängung bzw. Lagerung eines rotierenden Maschinenteils, eines Prellbocks, Fahrstuhls, Lastkran und dergleichen. Ein solches Versagen bedeutet stets eine erhebliche Gefahr für Menschen und Maschinen.

Neben statischen Lasten sind insbesondere auch dynamische Lasten Ursache für eine Überbeanspruchung von Bauteilverbindungen. Als Beispiel für dynamische Lasten seien Erdbeben oder der Aufprall bewegter Massen auf eine Gesamtkonstruktion genannt, beispielsweise der Anprall eines Fahrzeugs an ein Bauwerk oder der Aufprall bewegter Maschinenteile auf benachbarte Maschinenelemente. Da die zerstörerische Energie bei dynamischer Belastung zu einem großen Teil aus deren Bewegung bzw. Geschwindigkeit kommt, werden in diesen Fällen die Verbindungsmittel nur kurzzeitig beansprucht. Wird dabei jedoch - wenn auch nur für kurze Zeit - die maximale Grenzlast überschritten, so kommt es in der Folge zu einem Bruch und damit Totalversagen der Verbindung.

### Stand der Technik:

In der Praxis ist es allgemein bekannt, Bauteile, z.B. die sich gegenüberliegenden Ringflansche zweier Rohre oder zwei sich gegenüberliegende Kopfplatten oder Laschen eines Fachwerkknotens, mittels Schrauben, Bolzen oder Nieten kraftschlüssig zusammenzuspannen.

Dadurch entsteht eine starre Verbindung, die bei Lastangriffen parallel zur Kontaktfuge der beiden Bauteile eine Scherbeanspruchung des Verbindungsmittels mit sich bringt. Die Unnachgiebigkeit der Verbindung in der Ebene der angreifenden Kraft führt zu sehr hohen Spannungen im Verbindungsmittel selbst, die bei Überschreiten der maximal aufnehmbaren Last ohne jede Vorankündigung einen Scherbruch bedingen und damit ein Totalversagen der Bauteilverbindung auslösen. Je nach Funktion einer Verbindung können dadurch schwere Schäden eintreten. Um Schlimmerem vorzubeugen ist es daher notwendig, stabilitätsrelevante Bauteilverbindungen unter Zugrundelegung hoher Sicherheitsbeiwerte zu bemessen, was allerdings dazu führt, dass die wesentlichen Komponenten einer Bauteilverbindung für den normalen Lastfall überdimensioniert sind. Dies ist nicht nur in wirtschaftlicher Hinsicht nachteilhaft, sondern erschwert vor allem unter beengten Raumverhältnissen, wie sie zum Beispiel im Fachwerkknoten regelmäßig anzutreffen sind, die Montagearbeiten erheblich.

Dynamische Belastungen mit hoher kinetischer Energie werden im Maschinebau vor allem von schnell drehenden Rotoren, Schwungrädern, Mühlen und Turbinen erzeugt. Der Rotor einer Molekularvakuumpumpe dreht beispielsweise mit bis zu 100.000 U/min. Bei einem Bruch des Rotors treffen die Bruchstücke mit extrem hoher Geschwindigkeit auf das Rotorgehäuse, wobei diese Impulse auf die Verbindungsmittel im Befestigungsbereich der Vakuumpumpe übertragen werden.

In diesem Zusammenhang sind aus der WO 2004/020839 A2 und EP 1 314 892 B1 Vakuumpumpen bekannt, die im Verbindungsbereich zu einer angeschlossenen Vakuumkammer Verbindungsmittel besitzen, die jeweils von einem Verformungsraum umgeben sind. Im einfachsten Fall besteht der Verformungsraum aus einer gegenüber dem Durchmesser des Verbindungsmittels deutlich größeren Bohrung, welche von dem Verbindungsmittel durchsetzt ist. Bei Überschreiten der maximal aufnehmbaren Kraft quer zur Achse des Verbindungsmittels wird eine Relativbewegung des einen Bauteils gegenüber dem anderen ermöglicht, wobei sich gleichzeitig das Verbindungsmittel im Verformungsraum verformt. Der sich dabei einstellende Verformungsweg und die auf diesem Weg geleistete Verformungsarbeit absorbieren einen Teil der Energie und helfen so, Spannungsspitzen im Verbindungsmittel zu begrenzen. Damit ist zwar ein erster Fortschritt erreicht, ein Nachteil besteht jedoch weiterhin darin, dass die beiden in den Bauteilen verankerten Enden des Verbindungsmittels während der Verformung ihre Ausrichtung senkrecht zur Kontaktfuge beibehalten und das Verbindungsmittel im mittleren Längsabschnitt zweifach mit entgegengesetzter Krümmung verformt wird. Dabei besteht die Gefahr einer lokalen Überbeanspruchung im Krümmungsbereich, der den Ausgangspunkt für einen Bruch des Verbindungsmittels bildet.

Vor diesem Hintergrund liegt der Erfindung die Aufgabe zugrunde, eine Anordnung zum Verbinden zweier Bauteile bereitzustellen, die im Falle einer Überbeanspruchung des Verbindungsmittels erhebliche Sicherheitsreserven bereitstellt, um einem Totalversagen der Verbindung vorzubeugen.

### Darstellung der Erfindung

Diese Aufgabe wird durch eine Anordnung mit den Merkmalen des Patentanspruchs 1 gelöst. In Verbindung mit Vakuumpumpen wird die Aufgabe durch den Gegenstand des Patentanspruchs 25 gelöst.

Vorteilhafte Ausführungsformen ergeben sich aus den Unteransprüchen.

Die Erfindung beruht auf der Erkenntnis, dass auf Zug oder auf Zug und Biegung beanspruchte Verbindungsmittel in der Lage sind, höhere Kräfte abzutragen als rein auf Scherung beanspruchte. Es ist das Verdienst der Erfindung, darauf aufbauend durch Schaffung geeigneter konstruktiver Maßnahmen die bei bekannten Bauteilverbindungen auftretenden Scherbeanspruchungen in Zugbeanspruchungen umzuwandeln, um dadurch ein verbessertes Lastabtragungsverhalten zu erlangen.

Zu diesem Zweck ist gemäß der Erfindung vorgesehen, bei Überschreiten einer maximalen Last Relativbewegungen zwischen dem ersten und zweiten Bauteil zuzulassen. Die dabei eintretende Veränderung der geometrischen Rahmenbedingungen führen zu einer Lage- und gegebenenfalls Formänderung der Verbindungsmittel, aufgrund derer die Verbindungsmittel nunmehr in Richtung ihrer Längsachse beansprucht werden. Die dabei geleistete Arbeit errechnet sich aus dem Integral der aus der Verformung resultierenden Zugspannungen über die Querschnittsfläche des Verbindungsmittels multipliziert mit dem Verformungsweg. Diese Arbeit entspricht der Energie, die jedes Verbindungsmittel absorbieren kann und die insbesondere bei kurzzeitiger, impulsartiger Belastung dem Bruch des Verbindungsmittels und damit größerem Schaden vorbeugt. Zusätzlich führt die Bewegung eines Bauteils in Kraftrichtung zu einer Kraftumlagerung im statischen System und hat daher die Vermeidung von Spannungsspitzen zur Folge.

In Umsetzung dieses Gedankens ist zur Verankerung des Verbindungsmittels im ersten Bauteil ein Drehkörper vorgesehen, der eine Lageänderung des Verbindungsmittels im Bereich der Verankerung im Zuge der Relativbewegung der Bauteile ausgleicht. Dadurch ist im Überlastungsfall das Verbindungsmittel im Bereich des Drehkörpers lediglich auf Zug beansprucht. Durch Vorsehen von Drehkörpern an beiden Enden eines Verbindungsmittels ist es sogar möglich, das Verbindungsmittel über seine gesamte Länge ausschließlich auf Zug zu beanspruchen.

Der Drehkörper besitzt in vorteilhafter Weiterbildung der Erfindung eine rotationssymmetrische Gestalt, beispielsweise eine kegel- oder kugelförmige. Dies lässt eine Relativbewegung der zu verbindenden Bauteile in beliebiger Richtung der Verbindungsebene zu und eignet sich daher insbesondere dann, wenn die Lastangriffsrichtung nicht bekannt ist. Ist hingegen die Lastangriffsrichtung vorgegeben, so genügt es, wenn der Drehkörper infolge seiner geometrischen Ausbildung eine Bewegung in diese Richtung ermöglicht. Geeignete Drehkörper besitzen beispielsweise zylindrische oder teilzylindrische Gestalt.

Die im Bauteil vorgesehene Aufnahme für den Drehkörper besteht im einfachsten Fall lediglich aus dem Rand einer Öffnung im Bauteil, an dem der Drehkörper mit seinem Außenmantel oder Außenumfang anliegt. Um einer zu hohen Materialbeanspruchung vorzubeugen ist es vorteilhaft, an dem Rand eine Fase vorzusehen oder diesen nach Art einer Hohlkegelfläche auszubilden. Die geringsten Flächenpressungen werden jedoch erreicht, wenn der Drehkörper eine im Querschnitt konvexe Kontur besitzt und die Aufnahme dazu komplementär ausgebildet ist.

In vorteilhafter Weiterbildung der Erfindung ist die Anordnung eines Verformungsraums im Bereich des mindestens einen Verbindungsmittels vorgesehen. Dieser stellt sicher, dass eine ausreichende Relativbewegung der zu verbindenden Bauteile nicht durch eine Zwängung der Verbindungsmittel behindert ist. Aus statischer Sicht ist dabei ein sich in Richtung des gegenüberliegenden Bauteils weitender Verformungsraum von Vorteil, da damit eine Schwächung des Bauteilquerschnitts minimal ist. Gemäß einer besonderen Ausführungsform der Erfindung ist der Öffnungswinkel der Aufweitung so groß, dass der Schaftbereich des Verbindungsmittels bei maximaler Auslenkung im Überlastungsfall über seine gesamte Länge an der Wandung des Verformungsraums anliegt.

Der Verformungsraum kann durch entsprechende Ausnehmungen in einem oder beiden Bauteilen hergestellt sein. Alternativ dazu kann der Verformungsraum auch durch Vorsehen eines axialen Spalts zwischen den beiden Bauteilen gebildet sein. Es ist auch denkbar, die beiden Möglichkeiten miteinander zu kombinieren, das heißt, der Verformungsraum wird von Ausnehmungen in einem oder beiden Bauteilen und einem axialen Spalt zwischen den Bauteilen gebildet.

### Kurzbeschreibung der Zeichnungen

Ohne sich darauf einzuschränken wird die Erfindung nachstehend anhand eines in der Zeichnung dargestellten Ausführungsbeispiels näher erläutert. Soweit möglich werden dabei zum besseren Verständnis für struktur- oder funktionsgleiche Merkmale identische Bezugszeichen verwendet.

Es zeigt
- Fig. 1a: eine Schrägansicht auf ein Stabtragwerk, dessen einzelne Elemente mittels einer erfindungsgemäßen Anordnung verbunden sind,
- Fig. 1b: ein Detail des in Fig. 1 markierten Bereichs des dortigen Stabtragwerks,
- Fig. 2: eine Schrägansicht auf die Endabschnitte zweier Rohre, die mittels einer erfindungsgemäßen Anordnung verbunden sind,
- Fig. 3: einen Querschnitt durch eine erste Ausführungsform einer erfindungsgemäßen Anordnung entlang der in Fig. 4 dargestellten Linie III - III,
- Fig. 4: eine Draufsicht auf die in Fig. 3 dargestellte Anordnung,
- Fig. 5: den in Fig. 3 dargestellten Querschnitt nach Überlastung des Verbindungsmittels,
- Fig. 6: einen Querschnitt durch eine zweite Ausführungsform einer erfindungsgemäßen Anordnung entlang der in Fig. 7 dargestellten Linie VI-VI,
- Fig. 7: eine Draufsicht auf die in Fig. 6 dargestellten Ausführungsform,
- Fig. 8: einen weiteren Querschnitt durch die in den Figuren 6 und 7 dargestellte Ausführungsform entlang der in Fig. 7 dargestellten Linie VIII - VIII,
- Fig. 9 bis 12: jeweils einen Querschnitt durch vorteilhafte Abwandlungen einer erfindungsgemäßen Anordnung,
- Fig. 13: einen Querschnitt durch eine Ausführungsform einer erfindungsgemäßen Anordnung mit zwei Drehkörpern,
- Fig. 14: einen Querschnitt durch die in Fig. 13 dargestellte Anordnung nach Überlastung des Verbindungsmittels,
- Fig. 15: einen Längsschnitt durch eine Vakuumpumpe mit einer erfindungsgemäßen Anordnung im Bereich der Flanschverbindung zu einer Vakuumkammer,
- Fig. 16: ein Detail XVI der in Fig. 15 dargestellten Vakuumpumpe im gestrichelt markierten Bereich des Flanschanschlusses,
- Fig. 17: ein Detail XVII einer alternativen Ausführungsform der in Fig. 15 dargestellten Vakuumpumpe im gestrichelt markierten Bereich des Flanschanschlusses,
- Fig. 18: eine Draufsicht auf die in Fig. 17 dargestellte Anordnung,
- Fig. 19: einen Querschnitt durch eine weitere Ausführungsform der Erfindung im Bereich der Flanschverbindung einer Vakuumpumpe,
- Fig. 20: den in Fig. 19 dargestellte Querschnitt nach Überlastung des Verbindungsmittels, und
- Fig. 21: ein Detail XXI einer weiteren Ausführungsform der in Fig. 15 dargestellten Vakuumpumpe im gestrichelt markierten Bereich des Flanschanschlusses,

### Wege zur Ausführung der Erfindung

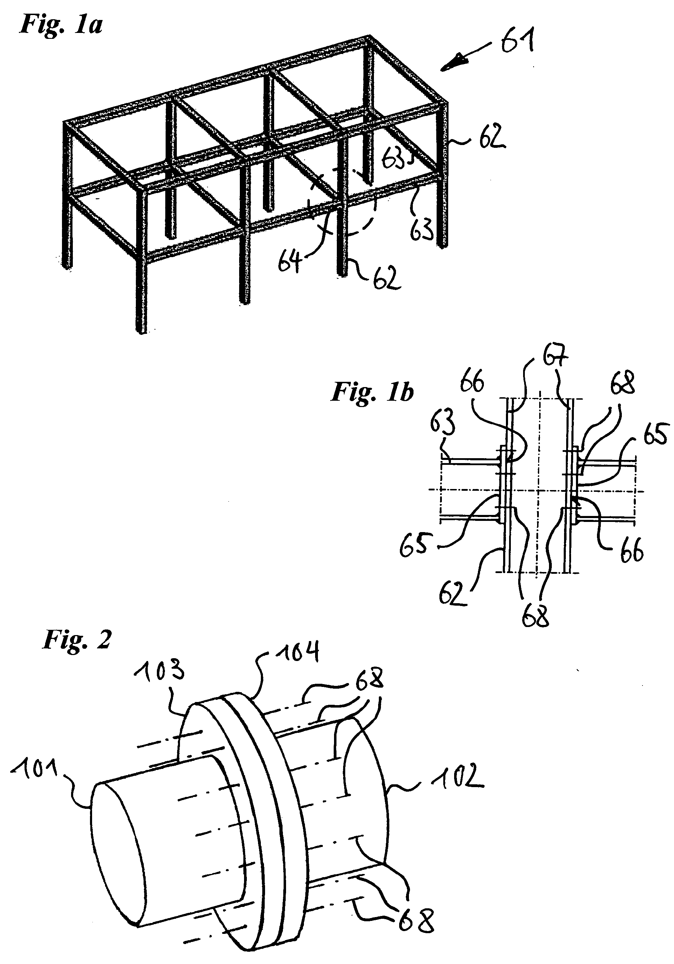

Figur 1 a zeigt ein erstes Anwendungsgebiet der Erfindung im Bereich des Bauwesens. Man sieht in einer Schrägansicht das Stahlskelett 61 eines Bauwerks, wobei der Gegenstand nachfolgender Ausführungen ebenso ein Fachwerkträger, Brückenbauwerk, Turm oder dergleichen sein könnte. Das Stahlskelett 61 setzt sich aus einer Vielzahl von Bauteilen zusammen, insbesondere aus vertikalen Stützen 62 und horizontalen Riegeln 63, die jeweils in einem Knotenpunkt 64 zusammenlaufen und dort kraftschlüssig miteinander verbunden sind.

Figur 1 b zeigt einen solchen Knotenpunkt 64 in größerem Maßstab. Man sieht den Längsabschnitt einer durchlaufenden Stütze 62 in Form eines Doppel-T-Trägers, an den beidseits auf gleicher Höhe jeweils ein horizontaler Riegel 63, ebenfalls in Form eines Doppel-T-Trägers, anschließt. Zu diesem Zweck ist an das stirnseitige Ende der horizontalen Riegel 63 jeweils eine Kopfplatte 65 angeschweißt, die unter Bildung einer Kontaktfuge 66 an dem Flansch 67 des Stützenprofils anliegt. Über Verbindungsmittel 68, die in Figur 2 lediglich stilisiert durch Striche angedeutet sind, erfolgt der kraftschlüssige Anschluss der horizontalen Riegel 63 an die Stütze 62.

Eine weitere Anwendung der Erfindung geht aus Figur 2 hervor, wo die Enden zweier miteinander zu verbindenden Rohre 101 und 102 dargestellt sind. Ohne sich darauf einzuschränken können die Rohre 101 und 102 beispielsweise Teil einer maschinentechnischen Anlage oder einer Pipeline für Öl oder Gas sein. An den einander zugeordneten Enden der Rohre 101 und 102 sind Ringflansche 103 und 104 starr befestigt, die sich somit planparallel und koaxial gegenüberliegen. Die Ringflansche 103 und 104 sind von fluchtenden Bohrungen durchsetzt, welche zur Durchführung von Verbindungsmitteln bestimmt und die in Figur 2 lediglich mit den Linien 68 angedeutet sind. Mit Hilfe der Verbindungsmittel 68 werden die Ringflansche 103 und 104 axial zusammengespannt und damit die Rohre 101 und 102 verbunden.

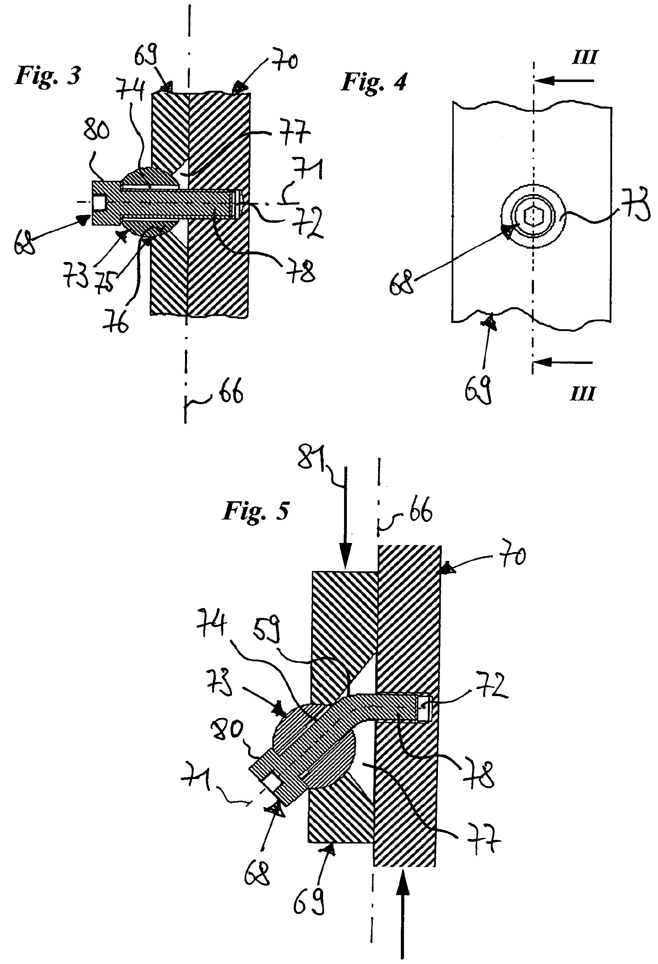

Eine erste erfindungsgemäße Möglichkeit die Riegel 63 und Stützen 62 bzw. Rohre 101 und 102 miteinander zu verbinden ist in den Figuren 3, 4 und 5 offenbart, wobei die Figuren 3 und 4 den Zustand unter Gebrauchslast zeigen, während Figur 5 den Zustand nach Überlastung des Verbindungsmittels 68 wiedergibt. Da die Erfindung jedoch nicht auf Bauwerke oder Rohrverbindungen beschränkt ist, geht es in den Figuren 3 bis 5 ganz allgemein um den Verbindungsbereich eines ersten Bauteils 69 und zweiten Bauteils 70, die im Zusammenhang mit dem in den Fig. 1a und b beschrieben Bauwerk den Stützen 62 bzw. Riegeln 63 des Stahlskeletts 61 und der in Fig. 2 beschriebenen Rohrverbindung den Flanschen 103 und 104 entsprechen.

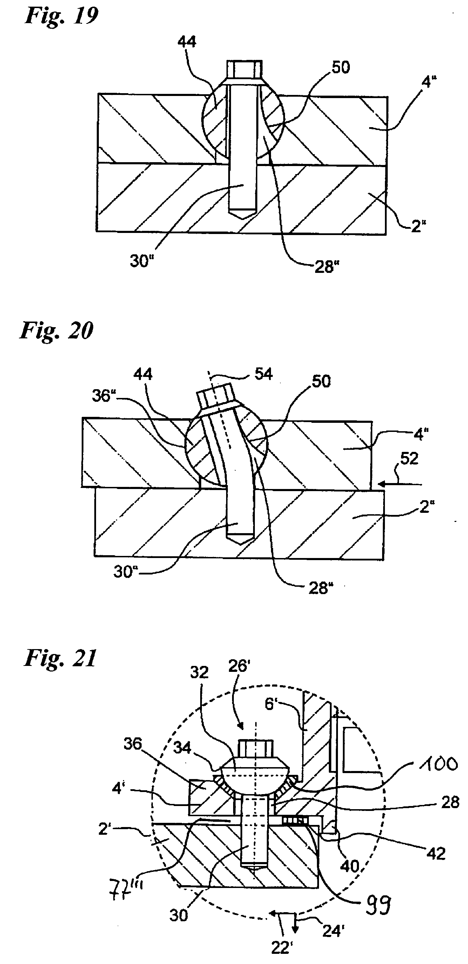

Die Bauteile 69 und 70 liegen unter Kontakt aneinander an und bilden auf diese Weise eine gemeinsame Kontaktfuge 66. Denkbar und im Rahmen der Erfindung liegend ist auch, dass zwischen den beiden Bauteilen 69 und 70 ein weiteres Bauteil eingespannt ist, die Kontaktfuge 66 quasi von einem Bauteil gebildet wird, was in Figur 21 dargestellt ist.

Das erste Bauteil 69 und das zweite Bauteil 70 sind durch ein Verbindungsmittel 68, hier in Form einer Schraube, miteinander verbunden. Niete, Bolzen und dergleichen als alternative Verbindungsmittel liegen ebenso im Rahmen der Erfindung. Die Achse des Verbindungsmittels 68 ist im vorliegenden Beispiel mit 71 bezeichnet und verläuft senkrecht zur Kontaktfuge 66. Zur Verankerung des Verbindungsmittels 68 im zweiten Bauteil 70 ist dort eine Gewindebohrung 72 vorgesehen, in die der endseitige Gewindeabschnitt 78 des Verbindungsmittels 68 eingreift.

Die gegenüberliegende Verankerung des Verbindungsmittels 68 im ersten Bauteil 69 umfasst einen kugelförmigen Drehkörper 73, mit einer zur Achse 71 koaxialen Durchgangsbohrung 74. Der Drehkörper 73 ist im ersten Bauteil 69 drehbar gelagert, wozu das erste Bauteil 69 eine als Aufnahme dienende kreisförmige Ausnehmung 75 aufweist, deren Leibungsfläche 76 komplementär zum Außenumfang des Drehkörpers 73 ausgebildet ist. Die Leibungsfläche 76 erstreckt sich dabei bis maximal zum halben Umfang des Drehkörpers 73, um ein einfaches Einfügen des Drehkörpers 73 in die Aufnahme zu ermöglichen. Auf diese Weise bildet die Leibungsfläche 76 eine Gleitlager, auf dem sich der Drehkörper 73 mit einem Teil seines Außenumfangs abstützt. Die Leibungsfläche 76 kann auch eine hohlkegelförmige Gestalt aufweisen oder vom umlaufenden, gegebenenfalls gefasten Rand einer die Ausnehmung 75 verkörpernden Bohrung gebildet sein. Die Ausnehmung 75 fluchtet mit der Gewindebohrung 72 in axialer Richtung. An die Ausnehmung 75 schließt sich axial in Richtung zum zweiten Bauteil 70 ein Verformungsraum 77 an, der im vorliegenden Fall eine zur Achse 71 rotationssymmetrische, nämlich kegelförmige Gestalt besitzt und der sich zur Kontaktfuge 66 hin weitet. Der Verformungsraum 77 wird somit vom ersten Bauteil 69, zweiten Bauteil 70 und dem Drehkörper 73 begrenzt.

Die Erfindung umfasst auch Ausführungsformen, bei denen sich die Leibungsfläche der die Aufnahme bildenden Ausnehmung über die gesamte Dicke des ersten Bauteils erstreckt und der Verformungsraum ausgehend von der Kontaktfuge lediglich im zweiten Bauteil angeordnet ist oder vom Zwischenraum zwischen dem ersten und zweiten Bauteil gebildet ist.

Die Kraft zum Zusammenspannen des ersten Bauteils 69 und zweiten Bauteils 70 wird über das Verbindungsmittel 68 erzeugt, dessen Schaft 78 sich durch die Durchgangsbohrung 74 erstreckt und das sich mit seinem Kopf 80 auf einer Abflachung des Drehkörpers 73 im Mündungsbereich der Durchgangsbohrung 74 abstützt. Durch Spannen des Verbindungsmittels 68 wird eine auf den Drehkörper 73 axial wirkende Druckkraft erzeugt, die über dessen kugelförmigen Außenumfang auf die Leibungsfläche 76 der Ausnehmung 75 und damit auf das erste Bauteil 69 übertragen wird.

Bei Überschreiten der maximalen Last, die in Figur 5 mit dem Pfeil 81 versinnbildlicht ist, kommt es zu einer Relativbewegung des ersten Bauteils 69 gegenüber dem zweiten Bauteil 70, wobei sich der in Figur 5 dargestellte Verformungszustand einstellt. Bedingt durch die Parallelverschiebung des ersten Bauteils 69 entlang der Kontaktfuge 66 wird der Drehkörper 73 zusammen mit dem ihn durchsetzenden Verbindungsmittel 68 aus der mit der Gewindebohrung 72 fluchtenden Sollposition verschoben. Dabei erzeugt der Drehkörper 73 einen seitlichen Druck auf den Schaftbereich 78 des Verbindungsmittels 68, der nach Überschreiten einer maximal aufnehmbaren Kraft eine Verformung des Verbindungsmittels 68 in den vom Verformungsraum 77 zur Verfügung gestellten freien Raum hinein bewirkt. Die Verformung entspricht einem Umbiegen des Verbindungsmittels 68 in Kraftangriffsrichtung und hat die Ausbildung einer Biegestelle 59 im Bereich des Verformungsraums 77 zur Folge. Die im Zuge der Verformung einsetzende Winkeländerung der Achse 71 im Schaftbereich 78 induziert ein Drehbewegung des Drehkörpers 73 in der Ausnehmung 75, mit dem gewünschten Ergebnis, dass das Verbindungsmittel 68 in dem Längsabschnitt von der Biegestelle 59 bis zum Kopf 80 unverformt bleibt.

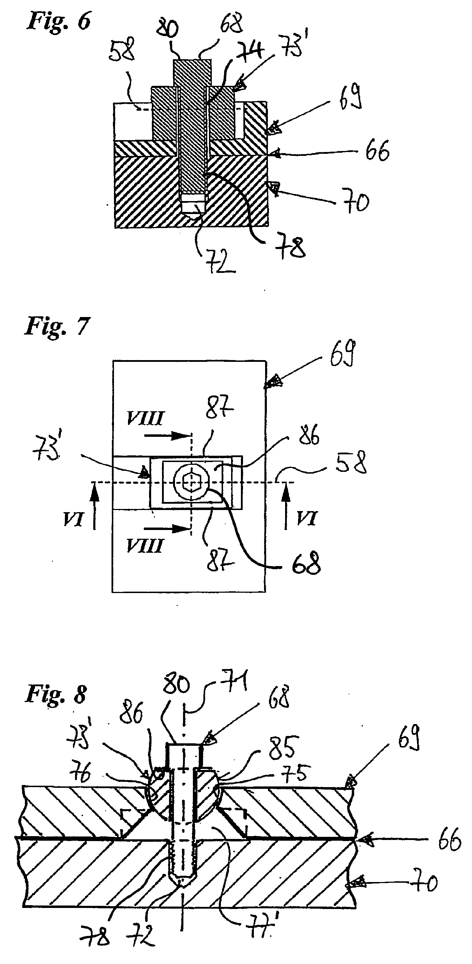

Die Figuren 6, 7 und 8 betreffen eine zweite Ausführungsform der Erfindung zum Verbinden zweier Bauteile 69, 70. Auch hier können die beiden Bauteile 69, 70 Teil eines Bauwerks sein, wie es unter den Figuren 1 a und 1 b beschrieben ist oder auch die Verbindungsflansche zweier Maschinenteile, Rohre und dergleichen darstellen gemäß Fig. 2.

Die zweite Ausführungsform entspricht im Wesentlichen der ersten Ausführungsform der Erfindung, so dass das dort Gesagte entsprechend gilt. Der Hauptunterschied zwischen den beiden Ausführungsformen besteht darin, dass der Drehkörper 73' keinen sphärischen Außenmantel aufweist, der Drehbewegungen in alle Richtung und damit Relativbewegungen der beiden Bauteile 69 und 70 in der Ebene der Kontaktfuge 66 erlaubt, sondern einen zylindrischen oder teilzylindrischen Außenumfang 85 besitzt, vorzugsweise mit einer Abflachung 86 im Bereich des Verbindungsmittels 68, wie insbesondere aus den Figuren 7 und 8 ersichtlich.

Die Ausnehmung 75' im ersten Bauteil 69 besitzt zur Aufnahme des Drehkörpers 73' eine diesem angepasste Kontur, wobei die dem zylindrischen Außenumfang 85 zugewandten Leibungsflächen 76' einen komplementären Verlauf aufweisen, um Lagerflächen für den Drehkörper 73' zur Verfügung zu stellen. Die beiden anderen zur Drehkörperlängsachse senkrechte Leibungsflächen sind plan ausgebildet und folgen damit dem Verlauf der Stirnseiten 87 des Drehkörpers 73'. Die damit vorgegebenen geometrischen Verhältnisse erlauben eine Rotation des Drehkörpers 73' lediglich um seine Längsachse 58, so dass Relativbewegungen der beiden Bauteile 69 und 70 auf eine translatorische Bewegung beschränkt sind, deren Richtung senkrecht zur Längsachse 58 des Rotationskörpers 73' und parallel zur Kontaktfuge 66 vorgegeben ist.

Der diese Bewegung ermöglichende Verformungsraum 77' besteht im vorliegenden Beispiel aus einem Schlitz, dessen Breite in Richtung der Längsachse 58 des Drehkörpers 73' dem Durchmesser des Verbindungsmittels 68 entspricht. Wie Fig. 8 zeigt besitzt der Verformungsraum 77' in der Lotebene zur Längsachse 58 des Drehkörpers 73' Kegel- oder Rechteckform (gestrichelt) und erlaubt auf diese Weise Bewegungen und Verformungen des Verbindungsmittels 68, wie bereits unter den Figuren 3 bis 5 beschrieben.

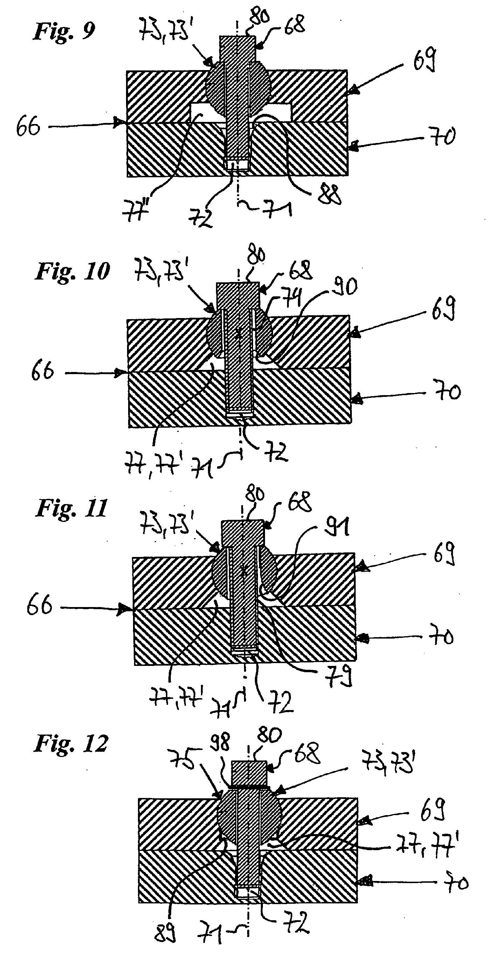

Die Figuren 9 bis 12 zeigen vorteilhafte konstruktive Weiterbildungen der erfindungsgemäßen Anordnung, die sowohl bei der ersten Ausführungsform gemäß der Figuren 3 bis 5 als auch bei der zweiten Ausführungsform gemäß der Figuren 6 bis 8 zur Anwendung kommen können.

Figur 9 zeigt einen Verformungsraum 77", der zur Kontaktfuge 66 hin keine zunehmende, sondern eine konstante Weite aufweist. In Verbindung mit der ersten Ausführungsform der Erfindung kann ein solcher Verformungsraum 77" beispielsweise durch Ausführen einer Sacklochbohrung hergestellt werden, woraus sich ein kreisscheibenförmiger Verformungsraum 77" ergibt. Bei der zweiten Ausführungsform der Erfindung kann zur Herstellung des Verformungsraums 77" ein zylindrisches Fräswerkzeug senkrecht zur Längsachse 58 des Drehkörpers 73' bewegt werden.

Unabhängig von der Gestalt des Verformungsraums 77, 77', 77" zeigt Figur 9 eine weitere vorteilhafte Abwandlung, bei der die Gewindebohrung 72 im zweiten Bauteil 70 am Rand zur Kontaktfuge 66 eine Fase 88 aufweist. Die Fase 88 ist vorteilhafter Weise umlaufend ausgebildet, kann sich jedoch auch nur auf einen Teilumfang der Gewindebohrung 72 beschränken. Durch die Fase 88 wird die maximale Krümmung des Verbindungsmittels 68 im Zuge seiner Verformung verringert und damit einem frühen Überlastungsbruch des Verbindungsmittels 68 vorgebeugt.

Einen ähnlichen Hintergrund, nämlich die Vermeidung zu geringer Krümmungsradien bei den Verbindungsmitteln 68, liegt der in Figur 10 gezeigten Ausführungsform zugrunde. Dort sieht man im Mündungsbereich der Durchgangsbohrung 74 in den Verformungsraum 77 bzw. 77' eine Fase 90, die ein sanfteres Umlenken des Verbindungsmittels 68 im Zuge seiner Verformung bewirkt.

Gleiches gilt für die in Figur 11 dargestellte Ausführungsform der Erfindung, bei der die Durchgangsbohrung 74 zum Verformungsraum 77 bzw. 77' hin nicht nur eine Fase aufweist, sondern eine trompetenartige, also progressiv zunehmende Aufweitung 91, die dem Verbindungsmittel 68 eine günstige Verformungskontur im Hinblick auf zu erwartende Spannungen im Schaftabschnitt 79 vorgibt.

Damit die Drehbewegung des Drehkörpers 73 bzw. 73' möglichst widerstandsfrei und ohne Ruck einsetzt, sieht die in Figur 12 dargestellte Ausführungsform der Erfindung eine Fase 89 vor, die sich entlang des dem Verformungsraums 77, 77' zugewandten Randes der Ausnehmung 75 erstreckt. Nach Spannen des Verbindungsmittels 68 stellt dieser Rand eine hochbelastete Lagerfläche dar, was im Laufe der Zeit zu Eindrückungen am Außenumfang des Drehkörpers 73 bzw. 73' führen kann. Damit diese Eindrückungen eine Rotationsbewegung des Drehkörpers 73, 73' nicht behindern, kommt der Fase 89 die Funktion einer Auflauffläche zu. Die Fase 89 kann dabei sowohl bei einem kegelförmigen als auch rechteckförmigen oder andersartigen Verformungsraum 77, 77', 77" angeordnet sein. Zur Vermeidung solcher Eindrückungen kann es auch vorteilhaft sein, den Drehkörper 73 bzw. 73' aus einem gegenüber dem ersten Bauteil 69 härteren Material herzustellen.

Aus Figur 12 geht ferner die Anordnung einer Unterlegscheibe 98 zwischen dem Kopf 80 des Verbindungsmittels 68 und der Abflachung am Drehkörper 73, 73' im Mündungsbereich der Durchgangsbohrung 74 hervor. Die Unterlegscheibe 98 besitzt vorteilhafterweise einen größeren Außendurchmesser als der Schraubenkopf 80, so dass damit die Krafteinleitung von dem Verbindungsmittel 68 in den Drehkörper 73, 73' verbessert ist.

Um eine größere Länge des Verbindungsmittels 68 zu erhalten und damit einer größeren möglichen Dehnweg im Überlastungsfall, besteht gemäß der Erfindung die Möglichkeit anstelle der Unterlegscheibe 98 eine nicht dargestellte Abstandshülse zwischen Kopf 80 und Drehkörper 73, 73' aufzuschieben. Mit der damit einhergehenden Verlängerung des Schaftbereichs des Verbindungsmittels vergrößert sich dessen Potential zur Energieabsorption.

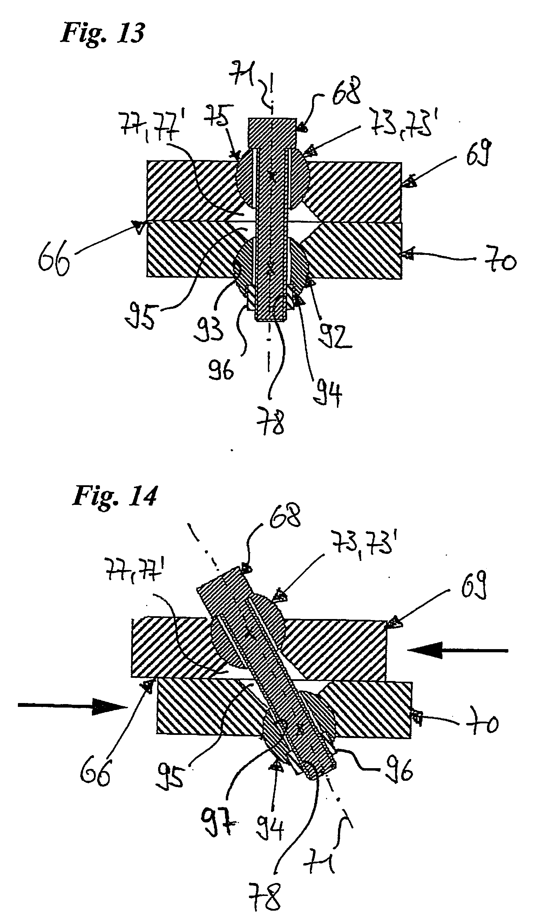

Eine besonders bevorzugte Ausführungsform der Erfindung zeigen die Figuren 13 und 14, einmal im bestimmungsgemäßem Gebrauch, bei dem ein erstes Bauteil 69 und zweites Bauteil 70 in Sollposition zusammen gehalten sind, und einmal nach Eintritt des Schadensfalls, bei dem infolge Überschreitung der maximalen Last, eine Relativbewegung des ersten Bauteils 69 gegenüber dem zweiten Bauteils 70 erfolgt ist. Die Besonderheit dieser Ausführungsform ergibt sich daraus, dass nicht nur das erste Ende des Verbindungsmittels 68 im ersten Bauteil 69 mittels eines Drehkörpers 73 bzw. 73' verankert ist, sondern in analoger Weise auch das zweite Ende des Verbindungsmittels 68 im zweiten Bauteil 70.

Dazu weist das zweite Bauteil 70 eine der Ausnehmung 75 im ersten Bauteil 69 axial gegenüberliegende Ausnehmung 92 auf, deren Leibungsfläche 93 einen konkaven Verlauf zeigt und die zur Aufnahme eines konvex geformten, vorzugsweise kugelförmigen oder zylindrischen zweiten Drehkörpers 94 dient. In Richtung der Kontaktfläche 66 schließt sich ein zweiter Verformungsraum 95 an, der im vorliegenden Fall kegelförmig oder die Form einer Kegelscheibe besitzt, aber auch entsprechend den unter den Figuren 3 bis 12 gemachten Ausführungen ausgebildet sein kann. Die Verankerung des zweiten Endes des Verbindungsmittels 68 im zweiten Drehkörper 94 erfolgt im vorliegenden Beispiel über eine Gewindemutter 96, die auf den Gewindeabschnitt 78 des Verbindungsmittels 68 aufgeschraubt ist und sich gegenüber einer entsprechenden Abflachung am zweiten Drehkörper 94 abstützt. Eine alternative Verankerungsweise besteht darin, die Durchgangsbohrung 97 im Drehkörper 94 mit einem Innengewinde zu versehen, in das der Gewindeabschnitt 78 eingreift.

In struktureller und funktioneller Hinsicht besteht eine weitgehende Übereinstimmung bei der Verankerung des Verbindungsmittels 68 im ersten Bauteil 69 bzw. zweiten Bauteil 70, so dass sinngemäß die beim ersten Bauteil 69 gemachten Ausführungen auch für die Verankerung im zweiten Bauteil 70 gelten.

Wie aus Figur 14 deutlich hervor geht, wird das Verbindungsmittel 68 weder im bestimmungsgemäßen Gebrauch noch bei Schadenseintritt auf Biegung beansprucht. Die aus äußerer Belastung aufzunehmenden Kräfte bewirken allein eine axiale Dehnung des Verbindungsmittels 68 im Zuge dessen Schrägstellung. Der Vorteil ist, dass lediglich auf Zug beanspruchte Verbindungsmittel 68 eine erheblich größere Last aufnehmen können, da das Verbindungsmittel 68 über seinen gesamten Querschnitt einheitlich belastet wird und dessen Tragvermögen somit besser ausgenutzt werden kann. Um eine maximale Auslenkung des Verbindungsmittels 68 zu erreichen, ist die Anordnung der Drehkörper 73, 73', 94 in den Bauteilen 69, 70 derart, dass das Verbindungsmittel 68 bei maximaler Auslenkung mit seinem Schaftabschnitt an der Wandung des Verformungsraums 77, 77', 96 anliegt

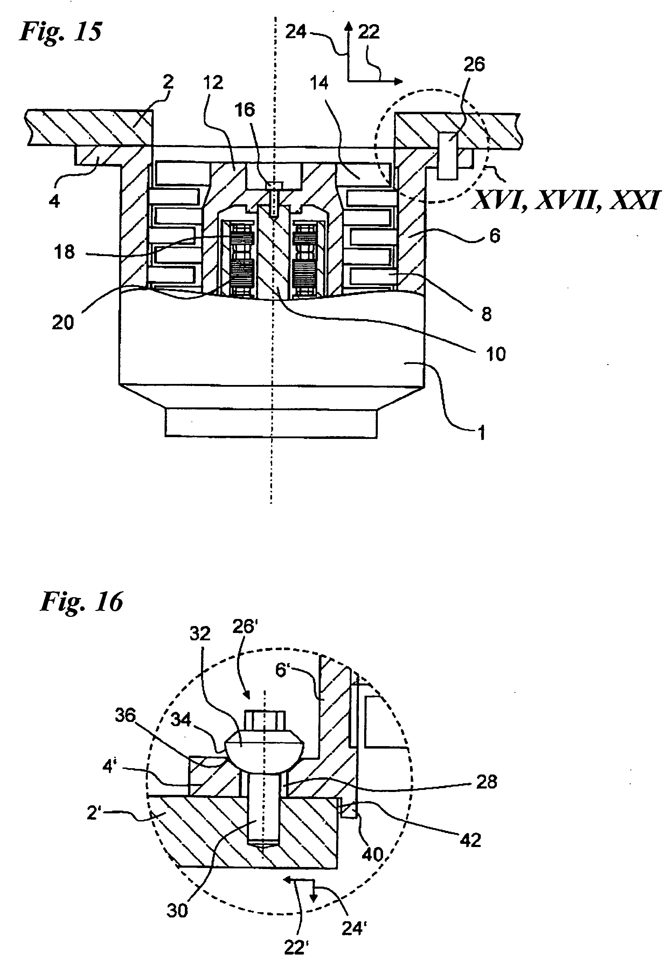

Die Figuren 15 bis 20 zeigen die Anwendung einer erfindungsgemäßen Anordnung am Beispiel einer Flanschverbindung. Im Speziellen geht es um den Anschluss einer Vakuumpumpe 1 an eine nicht weiter dargestellte Vakuumkammer, wobei Pumpenflansch 4 und Kammerflansch 2 in erfindungsgemäßer Weise miteinander verbunden sind. Der Kammerflansch 2 ist in den Zeichnungen als Öffnung in der Kammerwandung dargestellt, die radial nach außen von einer ringförmigen Flanschfläche umgeben ist. Ebenso könnten die in erfindungsgemäßer Weise zu verbindenden Teile aus zwei Rohrabschnitten bestehen, deren fluchtende, sich axial gegenüber liegende Enden jeweils einen Ringflansch aufweisen, die gegeneinander verspannt sind.

Der Pumpenflansch 4 ist am Gehäuse 6 der Vakuumpumpe 1 angeordnet, das vakuumdicht die der Vakuumerzeugung dienenden Komponenten umschließt. Dazu gehören insbesondere die Statorelemente 8, welche zusammen mit den am Glockenrotor 12 angebrachten Schaufeln 14 die Gasförderung nach molekularem Prinzip bewirken. Der Glockenrotor 12 ist mit einer Welle 10 verbunden, wobei die Verbindung durch eine oder mehrere Schrauben 16 oder durch gleichwirkende Mittel erzeugt wird. Die Welle 10 ist drehbar gelagert, hier mittels eines aktiven radialen Magnetlagers 18, und wird durch einen Antrieb 20 in schnelle Drehung versetzt. Der schlimmste Fehlerfall ist in diesem Beispiel das Zerreißen des Glockenrotors 12 entlang seiner Längsachse, also in axialer Richtung 24. Zwei oder mehr Bruchstücke des Glockenrotors 12 bewegen sich dann aufgrund der Fliehkräfte weitgehend in radialer Richtung 22. In diesem Fehlerfall darf die Verbindung von Pumpenflansch 4 und Kammerflansch 2 nicht vollständig gelöst werden. Ein Verbindungsmittel 26, welches eine lösbare Verbindung herstellt, die im Fehlerfall nicht gelöst werden kann, ist schematisch gezeigt und wird anhand der nachfolgenden Figuren beispielhaft erläutert.

Figur 16 zeigt den in Figur 15 gestrichelt markierten Verbindungsbereich XVI, in dem der Kammerflansch 2 und Pumpenflansch 4 in erfindungsgemäßer Weise miteinander verbunden sind. Das Gehäuse 6' und der sich in radialer Richtung 22' erstreckende Pumpenflansch 4' sind einstückig ausgebildet. Pumpenflansch 4' und Kammerflansch 2' sind durch Verbindungsmittel 26' miteinander verbunden. Jedes Verbindungsmittel 26' umfasst als Befestigungsmittel eine Schraube 30, welche einen sich in axialer Richtung durch den Pumpenflansch 4' erstreckenden Kanal 28 durchsetzt und welche mit ihrem Gewinde in einem im Kammerflansch 2' vorgesehenen Gegengewinde in Eingriff steht. Der Pumpenflansch 4' weist an dem dem Kammerflansch 2' abgewandten Ende des Kanals 28 eine Kegelfläche 36 auf. Die Kegelform ist besonders einfach herzustellen. Die Kegelfläche 36 dient als Aufnahme für einen Drehkörper 32, welcher eine konvex gewölbte Oberfläche 34 besitzt. Eine Form dieser Wölbung kann eine Kugeloberfläche sein.

Drehkörper 32 und Schraube 30 können ein monolithisches Teil sein, was eine einfacher Handhabung des Drehkörpers 32 bei der Montage erlaubt. Ebenso ist es möglich, dass der Drehkörper 32 aus einer speziell geformten Unterlegscheibe besteht, die mit der Schraube 30 zusammenwirkt und zwischen dieser und der Kegelfläche 36 gehalten wird. So ist es möglich einen Drehkörper 32 aus einem Material mit speziellen Eigenschaften und Festigkeiten zu verwenden, beispielsweise aus einem Material gleicher oder größerer Härte als das umgebende Bauteil.4, 4'.

Im Fehlerfall werden Kräfte in radialer Richtung 22' in die Flanschverbindung eingeleitet und wirken auf eine Verschiebung von Pumpenflansch 4' gegen Kammerflansch 2' in radialer Richtung 22' hin. Zudem entsteht ein Drehmoment um die Drehachse des Rotors 12, also um die axiale Richtung 24'. Bei Einleiten dieser Kräfte und Drehmomente verformt sich die Schraube 30, insbesondere verbiegt sich der nicht im Gegengewinde des Kammerflansches 2' befindliche Bereich. Trotz dieser Verbiegung bleiben die gewölbte Oberfläche 34 und die Kegelfläche in sicherem Kontakt, so dass die Verbindung nicht getrennt wird. Die Weite des Kanals 28 in radialer Richtung 22' und Umfangsrichtung ist so bemessen, dass die Wandung des Kanals 28 kein Abscheren der Schraube 30 bewirkt, das heißt die Schraube 30 kann sich im Kanal 28 behinderungsfrei verformen. Der Kanal 28 bildet somit einen Verformungsraum.

Ein Vorteil dieser Gestaltung des Drehkörpers 32 ist dessen Symmetrie. Durch eine rotationssymmetrische Gestaltung in Form der Kegelfläche 36 am Pumpenflansch 4' und der gewölbten Oberfläche 34 am Drehkörper 32, kann dieses Befestigungselement Krafteinwirkungen aus jeder in der Flanschebene liegende Richtung in gleichem Maße widerstehen. Dieser Symmetrieanforderung entsprechen weitere Gestaltungen von Aufnahme und Drehkörper. Beispielsweise erfüllt eine zylindrische Bohrung als Aufnahme diese Anforderung, mit der ein koaxialer Kegel oder eine Kugel als Drehkörper zusammen wirkt. Die Gestaltung ist so zu wählen, dass Aufnahme und Drehkörper derart zusammenwirken, dass die Verdrehung des Drehkörpers gegenüber der Aufnahme ermöglicht und vorzugsweise begünstigt wird.

Um ein Abscheren der Schrauben 30 durch ein extremes Aufweiten des Gehäuses 6' zu verhindern, kann ein als Anschlag dienender Kragen 40 am Gehäuse 6' vorgesehen sein. Wenn Teile des Glockenrotors 12 in das Gehäuse 6' einschlagen und dieses in Richtung Schraube 30 drücken, kommt der Kragen 40 mit dem Kammerflansch 2' in Kontakt und stoppt die Bewegung. Der Kragenspalt 42 zwischen Kragen 40 und Kammerflansch 2' ist dabei so bemessen, dass eine leichte Montage der Vakuumpumpe 1 am Kammerflansch 2' möglich ist. Ein zu enger Kragenspalt 42 kann die Montage erschweren, da eine sehr genaue Zentrierung erforderlich wird. Ein weiterer Gesichtspunkt bei der Wahl des Kragenspalts 42 ist die Weite des Kanals 28. Vorteilhaft ist es, wenn der Kragenspalt 42 enger als der Abstand von Schraube 30 zu Kanalwand ist. Hierdurch wird ein Abscheren der Schraube 30 verhindert.

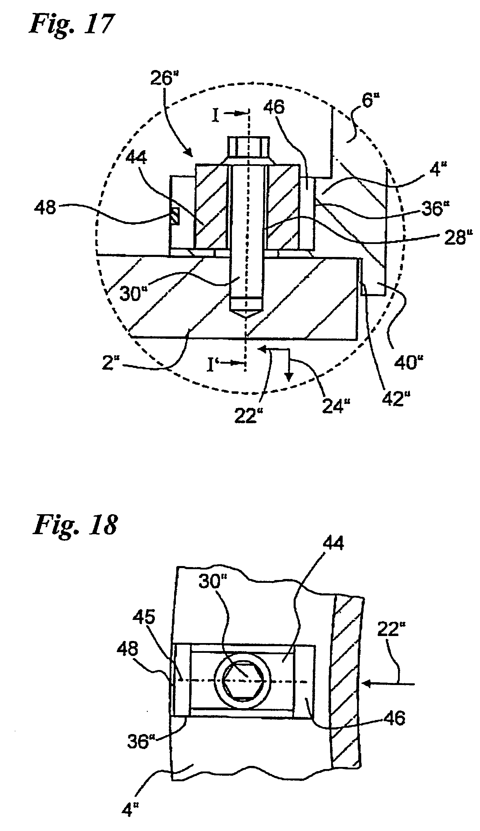

Ein weiteres Ausführungsbeispiel ist in den Figuren 17 bis 20 dargestellt. In Figur 17 ist ebenfalls der durch Strichelung markierte Ausschnitt der in Figur 1 gezeigten Anordnung dargestellt.

Am Gehäuse 6" ist der Pumpenflansch 4" angeordnet, welcher mit dem Kammerflansch 2" verbunden ist. Die Verbindung wird durch das Verbindungsmittel 26" bewirkt. Im Kammerflansch 2" ist ein Gewinde vorgesehen, mit welchem das Gewinde einer als Befestigungsmittel wirkenden Schraube 30" im fertig montierten Zustand der erfindungsgemäßen Anordnung in Eingriff steht. Die Schraube 30" durchsetzt einen Kanal 28", welcher in einer Rolle 44 vorgesehen ist. Diese Rolle 44 ist in einer Aufnahme 36" am Pumpenflansch 4" angeordnet. Die Aufnahme 36" ist derart gestaltet, dass die Rolle 44 in radialer Richtung 22" verschiebbar ist. Hierzu verbleibt ein Rollenspalt 46 zwischen Pumpenflansch 4" und Rolle 44. Eine Sicherung 48 verhindert das Herausrutschen der Rolle 44 aus der Aufnahme für den Fall, dass die Vakuumpumpe 1 nicht montiert ist, denn dann wird die Rolle 44 nicht durch die Schraube 30" gehalten.

Vom Pumpenflansch 4" erhebt sich ein Kragen 40", in die dem Gehäuse abgewandte axiale Richtung 24". Werden Kräfte auf das Gehäuse 6" und somit auf den Pumpenflansch 4" in axialer Richtung 24" eingeleitet, wird der Kragenspalt 42" aufgezerrt und Kragen 40" und Pumpenflansch 4" geraten in Kontakt miteinander. Der Kragenspalt 42" ist so bemessen, dass er eine einfache Montage der Vakuumpumpe 1 erlaubt, aber kleiner ist als der Rollenspalt 46. Dies verhindert das Einwirken von Scherkräften in radialer Richtung auf die Schraube 30", welche bei Einschlag von Rotorbruchstücken im Fehlerfall entstehen.

In Figur 18 ist eine Draufsicht auf den Pumpenflansch 4" dargestellt. Diese Darstellung verdeutlicht, dass die Längsachse 45 der Rolle 44 im Wesentlichen in radialer Richtung 22" liegt. Die Sicherung 48 begrenzt die Bewegung in der Aufnahme 36" radial nach außen und kann beispielsweise als ein den Pumpenflansch 4" umlaufender Ring gestaltet sein.

Die Wirkung der Rolle 44 soll durch den in den Figuren 19 und 20 dargestellten Schnitt entlang der Linie I - I verdeutlicht werden.

Figur 19 zeigt diesen Schnitt vor dem Eintreten des Fehlerfalles. Pumpenflansch 4" und Kammerflansch 2" sind in Ausgangsposition. Die Schraube 30" durchsetzt den Kanal 28" der Rolle 44. Der Kanal 28" kann eine Biegekontur 50 aufweisen.

In Figur 20 ist der Schnitt nach Eintreten des Fehlerfalls gezeigt. Durch das Drehmoment um die Rotationsachse der Welle 10 sind Pumpenflansch 4" und Kammerflansch 2" zueinander verschoben. Die Schraube 30" ist verbogen und die Rolle 44 hat sich in der Aufnahme 36" verdreht, welche durch ihre Formgebung eine Verdrehung zulässt. Dies kann kostengünstig dadurch geschafft werden, dass die Rolle 44 zylindrisch geformt und die Aufnahme 36" als Bohrung gestaltet ist. Durch die Verdrehung der Rolle 44 wird ein großer Teil der in ursprünglicher Kraftrichtung 52 wirkenden Kraft zu einer entlang der Schraubenachse 54 wirkenden Belastung umgelenkt. Einer solchen Belastung kann die Schraube 30" viel besser Stand halten als der in ursprünglicher Kraftrichtung liegenden Kraft, die eine Scherbelastung darstellt.

Die in einer Weiterbildung vorgesehene Biegekontur 50 gibt der Schraube 30" einen Verformungsbereich vor und verbessert so die Wirkung der Anordnung, die eine ungünstige Belastung in eine tolerierbare Belastung umwandelt. Vorteilhaft ist es, die Biegekontur 50 so zu gestalten, dass die Schraube 32" mit einer gewölbten Fläche in Berührung kommt und insbesondere keine Kante vorliegt. Dies verringert die auf die Schraube 30" einwirkende Kerbwirkung.

Figur 21 zeigt schließlich eine Ausführungsform der Erfindung, bei der zwischen Pumpenflansch 4' und Kammerflansch 2' eine weiteres Bauteil 99 zwischengefügt ist. Das Bauteil 99 kann beispielsweise ein Dichtungselement wie Elastomerringe oder metallische Dichtungen, zum Beispiel aus Kupfer sein. Es ist auch möglich, dass mit Hilfe des Bauteils 99 der Pumpenflansch 4' und Kammerflansch 2' in einem vorbestimmten axialen Abstand zueinander gehalten werden. Auf diese Weise ergibt sich ein Verformungsraum 77"' zwischen Pumpenflansch 4' und Kammerflansch 2', dessen Größe durch die Wahl der Dicke des Bauteils 99 bestimmbar ist.

Als weitere Besonderheit weist der in Figur 21 dargestellte Verbindungsbereich ein Ringscheibe 100 auf, die formschlüssig in das Ende des Kanals 28 eingesetzt ist und dort als Aufnahme und Gleitlager für den Drehkörper 32 dient. Die Ringscheibe 100 besitzt eine konkave Wölbung, die der konvexen Ausbildung des Drehkörpers 32 in diesem Umfangsabschnitt entspricht. Die Ringscheibe 100 kann aus einem weicheren Material als der Drehkörper 32 und/oder Pumpenflansch 4' bestehen, beispielsweise aus Messing oder Kupfer oder einem geeigneten Kunststoff.

Die Anwendung dieser Lösungen für eine Flanschverbindung ist nicht auf Vakuumpumpen mit Glockenrotoren beschränkt; vielmehr kommen die Vorteile auch bei anderen Rotorkonzepten zur Geltung. Auch kann der Gegenflansch anstelle eines Kammerflansches vom Flansch eines Schiebeventils oder eines Zwischenrohrstücks gebildet sein.

## Patentansprüche

1. Anordnung zum Verbinden eines ersten Bauteils (2, 2',2", 69) mit einem zweiten Bauteil (4, 4', 4", 70), wobei das erste Bauteil (2, 2',2", 69) und das zweite Bauteil (4, 4', 4", 70) mit Hilfe mindestens eines stabförmigen Verbindungsmittels (26, 26', 26", 68) unmittelbar unter Ausbildung einer gemeinsamen Kontaktfuge (66) oder mittelbar unter Klemmung eines weiteren Bauteils (99) in Richtung der Längsachse (71) des mindestens einen Verbindungsmittels (26, 26', 26", 68) zusammengespannt sind, und wobei das mindestens eine Verbindungsmittel (26, 26', 26", 68) mit seinem ersten Ende im ersten Bauteil (2, 2',2", 69) und mit seinem zweiten Ende im zweiten Bauteil (4, 4', 4", 70) verankert ist und dazwischen axial innerhalb einer Öffnung verläuft, **dadurch gekennzeichnet, dass** die Anordnung einen Drehkörper (73, 73') zur Verankerung des mindestens einen Verbindungsmittels (26, 26', 26", 68) im ersten Bauteil (2, 2',2", 69) umfasst, der in axialer Richtung von dem mindestens einen Verbindungsmittel (26, 26', 26", 68) durchsetzt ist und an dem das mindestens eine Verbindungsmittel (26, 26', 26", 68) mit seinem ersten Ende verankert ist, wobei sich der Drehkörper (73, 73') zum Ausgleich von Lageänderungen des mindestens einen Verbindungsmittels (26, 26', 26", 68) bei einer Relativbewegung des ersten Bauteils (2, 2',2", 69) gegenüber dem zweiten Bauteil (4, 4', 4", 70) auf einer als Gleitlager dienenden Aufnahme (75) am ersten Bauteil (2, 2',2", 69) abstützt.

2. Anordnung nach Anspruch 1, **dadurch gekennzeichnet, dass** der Drehkörper (73, 73') im Querschnitt einen zumindest teilweise konvex oder kegelförmigen ausgebildeten Außenumfang besitzt.

3. Anordnung nach Anspruch 1 oder 2, **dadurch gekennzeichnet, dass** der Drehkörper (73, 73') rotationssymmetrisch zur Achse (71) des mindestens einen Verbindungsmittels (26, 26', 26", 68) ausgebildet ist, vorzugsweise einen sphärischen Umfangsabschnitt zur Abstützung am ersten Bauteil (2, 2',2", 69) aufweist.

4. Anordnung nach Anspruch 1 oder 2, **dadurch gekennzeichnet, dass** der Drehkörper (73, 73') einen zylindrischen Umfangsabschnitt zur Abstützung am ersten Bauteil (2, 2',2", 69) aufweist.

5. Anordnung nach einem der Ansprüche 1 bis 4, **dadurch gekennzeichnet, dass** der Drehkörper (73, 73') eine Durchgangsbohrung (74) aufweist, durch welche sich das mindestens eine Verbindungsmittel (26, 26', 26", 68) erstreckt.

6. Anordnung nach Anspruch 5, **dadurch gekennzeichnet, dass** sich die Durchgangsbohrung (74) in Richtung des zweiten Bauteils (4, 4', 4", 70) weitet, vorzugsweise progressiv zunehmend.

7. Anordnung nach Anspruch 5 oder 6, **dadurch gekennzeichnet, dass** der dem zweiten Bauteil (4, 4', 4", 70) zugewandte Rand der Durchgangsbohrung (74) eine Fase (90) aufweist.

8. Anordnung nach einem der Ansprüche 1 bis 5, **dadurch gekennzeichnet, dass** der Drehkörper (73, 73') und das mindestens eine Verbindungsmittel (26, 26', 26", 68) ein monolithisches Teil sind.

9. Anordnung nach einem der Ansprüche 1 bis 8, **dadurch gekennzeichnet, dass** im Bereich des mindestens einen Verbindungsmittels (26, 26', 26", 68) ein Verformungsraum (77, 77', 77") vorgesehen ist, der von dem ersten Bauteil (2, 2',2", 69), zweiten Bauteil (4, 4', 4", 70) und Drehkörper (73, 73') begrenzt ist.

10. Anordnung nach Anspruch 9, **dadurch gekennzeichnet, dass** der Verformungsraum (77, 77', 77") durch Ausnehmungen im ersten Bauteil (2, 2',2", 69) und/oder zweiten Bauteil (4, 4', 4", 70) gebildet ist.

11. Anordnung nach Anspruch 9 oder 10, **dadurch gekennzeichnet, dass** sich der Verformungsraum (77, 77', 77") zum gegenüberliegenden ersten Bauteil (2, 2',2", 69) oder zweiten Bauteil (4, 4', 4", 70) hin weitet.

12. Anordnung nach einem der Ansprüche 9 bis 11, **dadurch gekennzeichnet, dass** der Verformungsraum (77, 77', 77") eine im Querschnitt kegelförmige oder rechteckförmige Gestalt besitzt.

13. Anordnung nach einem der Ansprüche 9 bis 12, **dadurch gekennzeichnet, dass** der Verformungsraum (77, 77', 77") eine zur Achse (71) des mindestens einen Verbindungsmittels (26, 26', 26", 68) rotationssymmetrische Gestalt besitzt, insbesondere eine kegelförmige oder kreisscheibenförmige.

14. Anordnung nach einem der Anspruch 9 bis 13, **dadurch gekennzeichnet, dass** das erste Bauteil (2, 2',2", 69) und zweite Bauteil (4, 4', 4", 70) in axialem Abstand zueinander angeordnet sind und der Verformungsraum (77"') durch den axialen Abstand gebildet ist.

15. Anordnung nach einem der Ansprüche 1 bis 14, **gekennzeichnet durch** eine relative Lage des Drehkörpers (73, 73') zum ersten Bauteil (2, 2',2", 69) in Richtung der Längsachse (71) des mindestens einen Verbindungsmittels (26, 26', 26", 68), derart dass bei maximaler Auslenkung des Drehkörpers (73, 73') in der Aufnahme (75) das mindestens eine Verbindungsmittel (26, 26', 26", 68) an dem dem zweiten Bauteil (4, 4', 4", 70) zugewandten Rand des ersten Bauteils (2, 2',2", 69) anliegt.

16. Anordnung nach einem der Ansprüche 1 bis 15, **dadurch gekennzeichnet, dass** beim ersten Bauteil (2, 2',2", 69) die Aufnahme für den Drehkörper (73, 73') von einer Hohlkegelfläche (36) oder Fase gebildet ist.

17. Anordnung nach einem der Ansprüche 1 bis 15, **dadurch gekennzeichnet, dass** beim ersten Bauteil (2, 2',2", 69) die Aufnahme für den Drehkörper (73, 73') komplementär zu dem damit zusammenwirkenden Umfangsabschnitt des Drehkörpers (73, 73') ausgebildet ist.

18. Anordnung nach einem der Ansprüche 1 bis 17, **dadurch gekennzeichnet, dass** am ersten Bauteil (2, 2',2", 69) die Aufnahme (75) für den Drehkörper (73, 73') von einer Ringscheibe mit einer Hohlkegelfläche oder konkaver Wölbung gebildet ist.

19. Anordnung nach einem der Ansprüche 1 bis 18, **dadurch gekennzeichnet, dass** der dem zweiten Bauteil (4, 4', 4", 70) zugewandte Rand der Aufnahme (75) am ersten Bauteil (2, 2',2", 69) für den Drehkörper (73, 73') eine Fase (89) aufweist.

20. Anordnung nach einem der Ansprüche 1 bis 19, **dadurch gekennzeichnet, dass** die Materialhärte des Drehkörpers (73, 73') mindestens so hoch ist wie die Materialhärte des ersten Bauteils (2, 2',2", 69).

21. Anordnung nach einem der Ansprüche 1 bis 20, **dadurch gekennzeichnet, dass** das mindestens eine Verbindungsmittel (26, 26', 26", 68) mit seinem zweiten Ende starr im zweiten Bauteil (4, 4', 4", 70) verankert ist und dass das zweite Bauteil (4, 4', 4", 70) in dem dem ersten Bauteil (2, 2',2", 69) zugewandten Bereich um das mindestens eine Verbindungsmittel (26, 26', 26", 68) herum eine Fase (88) aufweist.

22. Anordnung nach einem der Ansprüche 1 bis 21, **dadurch gekennzeichnet, dass** die Verankerung des mindestens einen Verbindungsmittels (26, 26', 26", 68) im zweiten Bauteil (4, 4', 4", 70) einen zweiten Drehkörper (94) umfasst, der in axialer Richtung von dem mindestens einen Verbindungsmittel (26, 26', 26", 68) durchsetzt ist und an dem das mindestens eine Verbindungsmittel (26, 26', 26", 68) mit seinem zweiten Ende verankert ist, wobei sich der zweite Drehkörper (94) gegenüber einer Aufnahme (92) am zweiten Bauteil (4, 4', 4", 70) abstützt, und mit einem im Bereich des mindestens einen Verbindungsmittels (26, 26', 26", 68) angeordneten Verformungsraum (95), der vom ersten Bauteil (2, 2',2", 69), zweiten Bauteil (4, 4', 4", 70) und zweitem Drehkörper (94) begrenzt ist.

23. Anordnung nach einem der Ansprüche 1 bis 22, **dadurch gekennzeichnet, dass** das erste Bauteil (2, 2',2", 69) und/oder zweite Bauteil (4, 4', 4", 70) einen Anschlag (40, 40") aufweisen, der die Relativbewegung des ersten Bauteils (2, 2',2", 69) zum zweiten Bauteil (4, 4', 4", 70) begrenzt.

24. Anordnung nach einem der Ansprüche 1 bis 23, **dadurch gekennzeichnet, dass** das erste Bauteil (2, 2',2", 69) und das zweite Bauteil (4, 4', 4", 70) sich gegenüberliegende Flansche einer Flanschverbindung sind, vorzugsweise einer Rohrverbindung.

25. Vakuumpumpe mit einem schnell drehenden Rotor und einem Pumpenflansch (4, 4', 4"), welcher mit einem Gegenflansch (2, 2',2") verbindbar ist, **dadurch gekennzeichnet, dass** Pumpenflansch (4, 4', 4") und Gegenflansch (2, 2',2") mit einer Anordnung gemäß einem der Patentansprüche 1 bis 24 miteinander verbunden sind.

## Claims

1. An arrangement for connecting a first component (2, 2', 2", 69) to a second component (4, 4', 4", 70), wherein the first component (2, 2', 2", 69) and the second component (4, 4', 4", 70) are clamped together directly while forming a common contact joint (66) or indirectly while clamping a further component (99) with the aid of at least one rod-shaped connection means (26, 26', 26", 68) in the direction of the longitudinal axis (71) of the at least one connection means (26, 26', 26", 68), and wherein the at least one connection means (26, 26', 26", 68) is anchored in the first component (2, 2', 2", 69) at its first end and is anchored in the second component (4, 4', 4", 70) at its second end and extends axially therebetween within an opening, **characterized in that** the arrangement comprises a rotary body (73, 73') for anchoring the at least one connection means (26, 26', 26", 68) in the first component (2, 2', 2", 69), with the rotary body being passed through by the at least one connection means (26, 26', 26", 68) in the axial direction and being anchored to the at least one connection means (26, 26', 26", 68) at its first end, and with the rotary body (73, 73') being supported on a receiver (75) serving as a slide bearing at the first component (2, 2', 2", 69) for a compensation of positional changes of the at least one connection means (26, 26', 26", 68) on a relative movement of the first component (2, 2', 2", 69) with respect to the second component (4, 4', 4", 70).

2. An arrangement in accordance with claim 1, **characterized in that** the rotary body (73, 73') has an at least partly convexly or conically formed outer periphery in cross-section.

3. An arrangement in accordance with claim 1 or claim 2, **characterized in that** the rotary body (73, 73') is configured as rotationally symmetrical with respect to the axis (71) of the at least one connection means (26, 26', 26", 68) and preferably has a spherical peripheral section for support at the first component (2, 2', 2", 69).

4. An arrangement in accordance with claim 1 or claim 2, **characterized in that** the rotary body (73, 73') has a cylindrical peripheral section for support at the first component (2, 2', 2", 69).

5. An arrangement in accordance with any one of the claims 1 to 4, **characterized in that** the rotary body (73, 73') has a passage bore (74) through which the at least one connection means (26, 26', 26", 68) extends.

6. An arrangement in accordance with claim 5, **characterized in that** the passage bore (74) widens in the direction of the second component (4, 4', 4", 70), preferably in a progressively increasing manner.

7. An arrangement in accordance with claim 5 or claim 6, **characterized in that** the margin of the passage bore (74) facing the second component (4, 4', 4", 70) has a chamfer (90).

8. An arrangement in accordance with any one of the claims 1 to 5, **characterized in that** the rotary body (73, 73') and the at least one connection means (26, 26', 26", 68) are a monolithic part.

9. An arrangement in accordance with any one of the claims 1 to 8, **characterized in that** a deformation space (77, 77', 77") is provided in the region of the at least one connection means (26, 26', 26", 68) and is bounded by the first component (2, 2', 2", 69), by the second component (4, 4', 4", 70) and by the rotary body (73, 73').

10. An arrangement in accordance with claim 9, **characterized in that** the deformation space (77, 77', 77") is formed by cut-outs in the first component (2, 2', 2", 69) and/or in the second component (4, 4', 4", 70).

11. An arrangement in accordance with claim 9 or claim 10, **characterized in that** the deformation space (77, 77', 77") widens toward the oppositely disposed first component (2, 2', 2", 69) or second component (4, 4', 4", 70).

12. An arrangement in accordance with any one of the claims 9 to 11, **characterized in that** the deformation space (77, 77', 77") has a conical or rectangular shape in cross-section.

13. An arrangement in accordance with any one of the claims 9 to 12, **characterized in that** the deformation space (77, 77', 77") has a rotationally symmetrical design, which is in particular conical or in the form of a circular disk, with respect to the axis (71) of the at least one connection means (26, 26', 26", 68).

14. An arrangement in accordance with any one of the claims 9 to 13, **characterized in that** the first component (2, 2', 2", 69) and the second component (4, 4', 4", 70) are arranged at an axial spacing from one another and the deformation space (77") is formed by the axial spacing.

15. An arrangement in accordance with any one of the claims 1 to 14, **characterized by** a relative position of the rotary body (73, 73') with respect to the first component (2, 2', 2", 69) in the direction of the longitudinal axis (71) of the at least one connection means (26, 26', 26", 68) such that, on a maximum deflection of the rotary body (73, 73') in the receiver (75), the at least one connection means (26, 26', 26", 68) contacts the margin of the first component (2, 2', 2", 69) facing the second component (4, 4', 4", 70).

16. An arrangement in accordance with any one of the claims 1 to 15, **characterized in that** the receiver for the rotary body (73, 73') at the first component (2, 2', 2", 69) is formed by a hollow conical surface (36) or chamfer.

17. An arrangement in accordance with any one of the claims 1 to 15, **characterized in that** the receiver for the rotary body (73, 73') at the first component (2, 2', 2", 69) is formed complementary to the peripheral section of the rotary body (73, 73') cooperating therewith.

18. An arrangement in accordance with any one of the claims 1 to 17, **characterized in that** the receiver (75) for the rotary body (73, 73') at the first component (2, 2', 2", 69) is formed by an annular disk having a hollow conical surface or a concave arching.

19. An arrangement in accordance with any one of the claims 1 to 18, **characterized in that** the margin of the receiver (75) at the first component (2, 2', 2", 69) facing the second component (4, 4', 4", 70) has a chamfer (89) for the rotary body (73, 73').

20. An arrangement in accordance with any one of the claims 1 to 19, **characterized in that** the material hardness of the rotary body (73, 73') is at least as high as the material hardness of the first component (2, 2', 2", 69).

21. An arrangement in accordance with any one of the claims 1 to 20, **characterized in that** the at least one connection means (26, 26', 26",80) is rigidly anchored in the second component (4, 4', 4".70) at its second end; and **in that** the second component (4, 4', 4", 70) has a chamfer (88) in the region about the at least one connection means (26, 26', 26", 68) facing the first component (2, 2', 2", 69).

22. An arrangement in accordance with any one of the claims 1 to 21, **characterized in that** the anchoring of the at least one connection means (26, 26', 26", 68) in the second component (4, 4', 4", 70) comprises a second rotary body (94) which is passed through in the axial direction by the at least one connection means (26, 26', 26", 68) and which is anchored to the at least one connection means (26, 26', 26", 68) at its second end, with the second rotary body (94) being supported with respect to a receiver (92) at the second component (4, 4', 4", 70) and having a deformation space (95) which is arranged in the region of the at least one connection means (26, 26', 26", 68) and which is bounded by the first component (2, 2', 2", 69), by the second component (4, 4', 4", 70) and by the second rotary body (94).

23. An arrangement in accordance with any one of the claims 1 to 22, **characterized in that** the first component (2, 2', 2", 69) and/or the second component (4, 4', 4", 70) has/have an abutment (40, 40") which bounds the relative movement of the first component (2, 2', 2", 69) with respect to the second component (4, 4', 4", 70).

24. An arrangement in accordance with any one of the claims 1 to 23, **characterized in that** the first component (2, 2', 2", 69) and the second component (4, 4', 4", 70) are oppositely disposed flanges of a flange connection, preferably of a pipe connection.

25. A vacuum pump having a fast-rotating rotor and a pump flange (4, 4', 4") which is connectable to a counter-flange (2, 2', 2"), **characterized in that** the pump flange (4, 4', 4") and the counter-flange (2, 2', 2") are connected to one another by an arrangement in accordance with any one of the claims 1 to 24.

## Revendications

1. Agencement destiné à relier un premier composant (2, 2', 2", 69) avec un second composant (4, 4', 4", 70), dans lequel le premier composant (2, 2', 2", 69) et le second composant (4, 4', 4", 70) sont serrés ensemble avec l'aide d'au moins un organe de liaison (26, 26', 26", 68) en forme de barre soit directement en formant une jointure de contact commune (66) soit indirectement en coinçant un autre composant (99) en direction de l'axe longitudinal (71) dudit au moins un organe de liaison (26, 26', 26", 68), et dans lequel ledit au moins un organe de liaison (26, 26', 26", 68) est ancré avec sa première extrémité dans le premier composant (2, 2', 2", 69) et avec sa seconde extrémité dans le second composant (4, 4', 4", 70) et s'étend entre ceux-ci axialement à l'intérieur d'une ouverture,
**caractérisé en ce que**
l'agencement inclut un corps rotatif (73, 73') pour l'ancrage dudit au moins un organe de liaison (26, 26', 26", 68) dans le premier composant (2, 2', 2", 69), qui est traversé en direction axiale par ledit au moins un organe de liaison (26, 26', 26", 68), et sur lequel est ancré ledit au moins un organe de liaison (26, 26', 26", 68) avec sa première extrémité, et dans lequel le corps rotatif (73, 73') s'appuie, pour compenser des variations de position dudit au moins un organe de liaison (26, 26', 26", 68) lors d'un mouvement relatif du premier composant (2, 2', 2", 69) par rapport au second composant (4, 4', 4", 70) sur un récepteur (75), servant de palier à coulissement, sur le premier composant (2, 2', 2", 69).

2. Agencement selon la revendication 1, **caractérisé en ce que** le corps rotatif (73, 73') possède en section transversale une périphérie extérieure réalisée au moins partiellement convexe ou en forme de cône.

3. Agencement selon la revendication 1 ou 2, **caractérisé en ce que** le corps rotatif (73, 73') est réalisé à symétrie de révolution par rapport à l'axe (71) dudit au moins un organe de liaison (26, 26', 26", 68), et présente de préférence un tronçon périphérique sphérique pour l'appui sur le premier composant (2, 2', 2", 69).

4. Agencement selon la revendication 1 ou 2, **caractérisé en ce que** le corps rotatif (73, 73') comprend un tronçon périphérique cylindrique pour l'appui sur le premier composant (2, 2', 2", 69).

5. Agencement selon l'une des revendications 1 à 4, **caractérisé en ce que** le corps rotatif (73, 73') comporte un perçage traversant (74) à travers lequel s'étend ledit au moins un organe de liaison (26, 26', 26", 68).

6. Agencement selon la revendication 5, **caractérisé en ce que** le perçage traversant (74) s'élargit en direction du second composant (4, 4', 4", 70), de préférence en augmentant progressivement.

7. Agencement selon la revendication 5 ou 6, **caractérisé en ce que** la bordure du perçage traversant (74) tournée vers le second composant (4, 4', 4", 70) comporte un chanfrein (90).

8. Agencement selon l'une des revendications 1 à 5, **caractérisé en ce que** le corps rotatif (73, 73') et ledit au moins un organe de liaison (26, 26', 26", 68) sont une pièce monolithique.

9. Agencement selon l'une des revendications 1 à 8, **caractérisé en ce que**, dans la région dudit au moins un organe de liaison (26, 26', 26", 68), il est prévu un espace de déformation (77, 77', 77"), qui est délimité par le premier composant (2, 2', 2", 69), par le second composant (4, 4', 4", 70) et par le corps rotatif (73, 73').

10. Agencement selon la revendication 9, **caractérisé en ce que** l'espace de déformation (77, 77', 77") est formé par des évidements dans le premier composant (2, 2', 2", 69) et/ou le second composant (4, 4', 4", 70).

11. Agencement selon la revendication 9 ou 10, **caractérisé en ce que** l'espace de déformation (70, 77', 77") s'élargit en direction du premier composant (2, 2', 2", 69) ou du second composant (4, 4', 4", 70) opposé.

12. Agencement selon l'une des revendications 9 à 11, **caractérisé en ce que** l'espace de déformation (77, 77', 77") possède une configuration à section transversale de forme conique ou de forme rectangulaire.

13. Agencement selon l'une des revendications 9 à 12, **caractérisé en ce que** l'espace de déformation (77, 77', 77") possède une configuration à symétrie de révolution par rapport à l'axe (71) dudit au moins un organe de liaison (26, 26', 26", 68), en particulier une configuration en forme de cône ou en forme de disque circulaire.

14. Agencement selon l'une des revendications 9 à 13, **caractérisé en ce que** le premier composant (2, 2', 2", 69) et le second composant (4, 4', 4", 70) sont agencés à distance axiale l'un de l'autre, et l'espace de déformation (77"') est formé par la distance axiale.

15. Agencement selon l'une des revendications 1 à 14, **caractérisé par** une position relative du corps rotatif (73, 73') par rapport au premier composant (2, 2', 2", 69) en direction de l'axe longitudinal (71) dudit au moins un organe de liaison (26, 26', 26", 68) telle que lors d'une déviation maximum du corps rotatif (73, 73') dans le récepteur (75), ledit au moins un organe de liaison (26, 26', 26", 68) s'applique contre la bordure du premier composant (2, 2', 2", 69) tournée vers le second composant (4, 4', 4", 70).

16. Agencement selon l'une des revendications 1 à 15, **caractérisé en ce que** dans le cas du premier composant (2, 2', 2", 69) le récepteur pour le corps rotatif (73, 73') est formé par une surface conique creuse (36) ou un chanfrein.

17. Agencement selon l'une des revendications 1 à 15, **caractérisé en ce que** dans le cas du premier composant (2, 2', 2", 69) le récepteur pour le corps rotatif (73, 73') est réalisé complémentaire à la portion de périphérie du corps rotatif (73, 73') qui coopère avec celui-ci.

18. Agencement selon l'une des revendications 1 à 17, **caractérisé en ce que** sur le premier composant (2, 2', 2", 69) le récepteur pour le corps rotatif (73, 73') est formé par un disque annulaire avec une surface conique creuse ou un bombement concave.

19. Agencement selon l'une des revendications 1 à 18, **caractérisé en ce que** la bordure, tournée vers le second composant (4, 4', 4", 70) du récepteur (75) sur le premier composant (2, 2', 2", 69) pour le corps rotatif (73, 73'), comporte un chanfrein (89).

20. Agencement selon l'une des revendications 1 à 19, **caractérisé en ce que** la dureté du matériau du corps rotatif (73, 73') est au moins aussi élevée que la dureté du matériau du premier composant (2, 2', 2", 69).

21. Agencement selon l'une des revendications 1 à 20, **caractérisé en ce que** ledit au moins un organe de liaison (26, 26', 26", 68) est ancré avec sa seconde extrémité rigidement dans le second composant (4, 4', 4", 70), et **en ce que** le second composant (4, 4', 4", 70) comporte, dans la région, tournée vers le premier composant (2, 2', 2", 69), un chanfrein tout autour dudit au moins un organe de liaison (26, 26', 26", 68).

22. Agencement selon l'une des revendications 1 à 21, **caractérisé en ce que** l'ancrage dudit au moins un organe de liaison (26, 26', 26", 68) dans le second composant (4, 4', 4", 70) inclut un second corps rotatif (94), qui est traversé en direction axiale par ledit au moins un organe de liaison (26, 26', 26", 68), et sur lequel ledit au moins un organe de liaison (26, 26', 26", 68) est ancré avec sa seconde extrémité, dans lequel le second corps rotatif (94) s'appuie sur le second composant (4, 4', 4", 70) à l'opposé d'un récepteur (92), et comporte un espace de déformation (95), agencé dans la région dudit au moins un organe de liaison (26, 26', 26", 68), qui est délimité par le premier composant (2, 2', 2", 69), par le second composant (4, 4', 4", 70) et par le second corps rotatif (94).

23. Agencement selon l'une des revendications 1 à 22, **caractérisé en ce que** le premier composant (2, 2', 2", 69) et/ou le second composant (4, 4', 4", 70) comprennent une butée (40, 40") qui limite le mouvement relatif du premier composant (2, 2', 2", 69) par rapport au second composant (4, 4', 4", 70).

24. Agencement selon l'une des revendications 1 à 23, **caractérisé en ce que** le premier composant (2, 2', 2", 69) et le second composant (4, 4', 4", 70) sont des brides opposées d'une liaison à bride, de préférence une liaison pour tubes.

25. Pompe à vide comprenant un rotor en rotation rapide et une bride de pompe (4, 4', 4"), laquelle est susceptible d'être reliée à une bride antagoniste (2, 2', 2"),
**caractérisée en ce que** la bride de pompe (4, 4', 4") et la bride antagoniste (2, 2', 2") sont reliées l'une à l'autre avec un agencement selon l'une des revendications 1 à 24.
